(19) Europäisches Patentamt

European Patent Office

Office européen des brevets

(11) **EP 0 953 889 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.$^7$: **G05B 9/02**

(21) Anmeldenummer: **99106074.0**

(22) Anmeldetag: **26.03.1999**

(54) **Verfahren und Einrichtung zur Detektion und Lokalisation von Sensorfehlern in Kraftfahrzeugen**

Method and device for detecting and locating sensor failures in motor vehicles

Méthode et dispositif pour détecter et localiser des pannes de capteurs dans les véhicules automobiles

(84) Benannte Vertragsstaaten:
**ES FR GB IT**

(30) Priorität: **28.04.1998 DE 19818860**

(43) Veröffentlichungstag der Anmeldung:
**03.11.1999 Patentblatt 1999/44**

(73) Patentinhaber: **DaimlerChrysler AG**
**70567 Stuttgart (DE)**

(72) Erfinder:
 • **Benzinger, Matthias**
  **71277 Rutesheim (DE)**
 • **Böttiger, Friedrich**
  **73733 Esslingen (DE)**
 • **Mahmoud, Rachad**
  **73269 Hochdorf (DE)**
 • **Suissa, Avshalom**
  **71272 Renningen (DE)**

(56) Entgegenhaltungen:
 • **NOWAKOWSKI S ET AL: "A NEW APPROACH FOR FAILURE DETECTION IN UNCERTAIN SYSTEMS" PROCEEDINGS OF THE CONFERENCE ON DECISION AND CONTROL, SAN ANTONIO, DEC. 15 - 17, 1993, Nr. CONF. 32, 15. Dezember 1993 (1993-12-15), Seite 257/258 XP000457751 INSTITUTE OF ELECTRICAL AND ELECTRONICS ENGINEERS ISBN: 0-7803-1298-8**
 • **ADJALLAH K ET AL: "NON-LINEAR OBSERVER-BASED FAULT DETECTION" PROCEEDINGS OF THE CONFERENCE ON CONTROL APPLICATIONS, GLASGOW, AUG. 24 - 26, 1994, Bd. 2, Nr. CONF. 3, 24. August 1994 (1994-08-24), Seiten 1115-1120, XP000594378 INSTITUTE OF ELECTRICAL AND ELECTRONICS ENGINEERS ISBN: 0-0703-1873-0**
 • **Q.XIA ET AL: "ROBUST ESIMATION AND COMPENSATION FOR ACTUATOR AND SENSOR FAILURES IN LINEAR SYSTEMS" INT.J.SYSTEMS SCI, Bd. 25, Nr. 11, November 1994 (1994-11), Seiten 1867-1876, XP002115358 UK**
 • **G.XIA ET AL: "PROJECTION OPERATIONS FOR FAILURE DETECTION AND ISOLATION" PROCEEDINGS OF THE 21ST IEEE CONFERENCE ON DECISION AND CONTROL, Bd. 2, 8. Dezember 1982 (1982-12-08), Seiten 708-711, XP002115359 USA**
 • **A.MADIWALE ET AL: "COMPARISON OF INNOVATIONS-BASED ANALYTICAL REDUNDANCY METHODS " PROCEEDINGS OF THE 1983 AMERICAN CONTROL CONFERENCE, Bd. 3, 22. Juni 1983 (1983-06-22), Seiten 940-945, XP002115360 USA**

## Beschreibung

Die Erfindung betrifft ein Verfahren und eine Einrichtung zur Detektion und Lokalisation von Fehlern bei Sensoren in Kraftfahrzeugen nach dem Oberbegriff des Anspruches 1 bzw. 14.

Aus der DE 42 26 746 C1 ist ein Verfahren zur Bestimmung eines fahrsituationsabhängigen Lenkwinkels bekannt, das dazu dient, mit einem möglichst geringen Aufwand an Hardware einen Lenkwinkel-Sollwert zu bestimmen. Dem Verfahren liegt ein Fahrzeug-Systemmodell zugrunde, das aus den Beschreibungsgrößen Gierwinkelgeschwindigkeit und Schwimmwinkel einen Radlenkwinkel bestimmt, wobei die Abweichung der Sollwerte von den sensorisch erfaßten Istwerten mit Hilfe eines Zustandsreglers ausgeregelt wird.

Bei derartigen sogenannten X-by-Wire-Systemen greifen elektronische Fahrzeugkomponenten aktiv in das Fahrgeschehen und die Fahrdynamik ein. Der Steuerung bzw. Regelung werden die sensorisch ermittelten Größen zugrunde gelegt. Ein Defekt eines Sensors hat einen falschen Istwert der betreffenden Größe zur Folge, der dazu führt, daß die von der Steuerung bzw. Regelung erzeugten, die Fahrdynamik beeinflussenden Stellsignale auf der Grundlage falscher Informationen generiert werden, was eine unerwünschte Reaktion des Fahrzeugs und eine Verschlechterung des Fahrverhaltens bewirken kann.

Der Erfindung liegt das Problem zugrunde, Fehler in Sensoren zur Erfassung von Systemgrößen, welche zur Zustandsbeschreibung des Kraftfahrzeugs dienen, eindeutig zu detektieren und zu lokalisieren.

Dieses Problem wird erfindungsgemäß bei einem Verfahren mit den Merkmalen des Anspruches 1 bzw. bei einer Einrichtung mit den Merkmalen des Anspruches 14 gelöst.

Meßsignale, die von den Sensoren aufgenommen werden, fließen in ein mathematisches Ersatzmodell ein, in dem Zustandsgrößen geschätzt werden, die das dynamische Verhalten des Fahrzeugs beschreiben. Diese berechneten Zustandsgrößen sind mit einem Schätzfehler behaftet, dessen Größe ermittelt wird und mit einem Residuum multipliziert wird, das aus der Differenz des Meßsignals und einer dem Meßsignal entsprechenden, aus den Zustandsgrößen des mathematischen Ersatzmodells berechneten Bezugsgröße gebildet wird. Aus der Multiplikation des Schätzfehlers mit dem Residuum wird eine charakteristische Kenngröße erzeugt, anhand derer Sensorfehler detektiert und lokalisiert werden können. Das Residuum wird durch die Multiplikation mit dem Schätzfehler verstärkt, wodurch Probleme mit einer zu geringen Amplitude und mit überlagertem System- und Meßrauschen vermieden bzw. kompensiert werden.

Die charakteristische Kenngröße wird zur weiteren Auswertung herangezogen, indem ein Fehlersignal erzeugt wird, falls die charakteristische Kenngröße einen Grenzwert übersteigt. In diesem Fall ist die Abweichung des Meßsignals von der berechneten Bezugsgröße unzulässig hoch, so daß die charakteristische Kenngröße über dem zulässigen Grenzwert liegt und der Sensorfehler eindeutig entdeckt werden kann.

Darüberhinaus ist auch der Fehlerort eindeutig lokalisierbar. Bei einem Einsatz mehrerer Sensoren wird eine der Sensoranzahl entsprechende Anzahl an Meßsignalen erzeugt, denen jeweils genau eine aus dem mathematischen Ersatzmodell ermittelte, physikalisch entsprechende Bezugsgröße zugeordnet wird. Jedem Meßsignal ist ein Residuum und jedem Residuum eine charakteristische Kenngröße zugeordnet, so daß aus der Position eines unzulässig hohen, skalaren Werts der Kenngröße innerhalb des Vektors aller charakteristischer Kenngrößen auf das der Kenngröße zugeordnete fehlerhafte Meßsignal und folglich auf den fehlerhaften Sensor geschlossen werden kann.

Zweckmäßig beruht das mathematische Ersatzmodell auf einem Kalman-Filteralgorithmus, insbesondere auf einem erweiterten Kalman-Filter, das mathematisch einem Beobachter entspricht und in der Lage ist, stochastische Störungen, die auf das System einwirken, zu verarbeiten. Dem Kalman-Filter werden die Sensorsgnale und gegebenenfalls weitere Systeminformationen zugeführt, woraus Prädiktionswerte, Filterschätzwerte und Residuen ermittelt werden, die für die Fehlererkennung weiterverarbeitet werden. Es können ohne physikalische Redundanz sowohl Einfach- als auch Mehrfachfehler, insbesondere in der Raddrehzahl- und Längsbeschleunigungssensorik, erkannt werden.

Der Zustandswert des Ersatzmodells entspricht dem Prädiktionswert des Kalman-Filters, der über die Meß- bzw. Beobachtungsmatrix transformiert und vorteilhaft zur Erzeugung der Residuen von den Meßsignalen subtrahiert wird. Aus den Prädiktionswerten und den Residuen können in einem nächsten Schritt die optimalen Filterschätzwerte ermittelt werden, wobei die Residuen über eine Verstärkungsmatrix transformiert werden, die bevorzugt die Form eines Kalman-Gain einnimmt.

Ein auftretender Sensorfehler spiegelt sich in einem fehlerhaften Prädiktionswert wieder, der sich vom Filterschätzwert des vorangegangenen Zeitschritts unterscheidet. Diese Differenz zwischen dem optimalen Filterschätzwert und dem Prädiktionswert wird als Schätzfehler ausgedrückt, der zur Identifizierung eines fehlerhaften Sensors herangezogen wird.

Der Schätzfehler wird durch Multiplikation mit den Residuen verstärkt, wobei im Falle mehrdimensionaler Zustands- und Meßgrößen aus den Residuen eine Diagonalmatrix mit den Elementen des Residuums auf der Hauptdiagonalen erzeugt wird. Die auf diese Weise ermittelte charakteristische Kenngröße ist ein typisches, einem bestimmten Sensor zuordenbares Identifikationsmerkmal, das zum Vergleich mit dem zulässigen Grenzwert herangezogen werden kann.

Vorteilhaft berechnet sich der Grenzwert adaptiv aus dem gewichteten Mittelwert der einzelnen Residuen, indem die Residuen durch die Anzahl der Meßsignale dividiert werden. Die einzelnen Residuen können zudem noch gewichtet werden. Man erreicht dadurch, daß Modellunsicherheiten, die durch Linearisierungen im mathematischen Ersatzmodell entstehen, nicht zu Fehlalarmen führen.

Als Meßsignale werden bevorzugt die Raddrehzahlen aller Fahrzeugräder und die Längsbeschleunigung des Fahrzeugs ermittelt.

Die Einrichtung zur Detektion und Lokalisation der Sensorfehler umfaßt eine Berechnungseinheit, in der das mathematische Ersatzmodell niedergelegt ist, und eine nachgeschaltete Auswerteeinheit, der die Zustandswerte und Residuen aus der Berechnungseinheit zugeführt werden und in der ein Fehlersignal erzeugt wird, falls die aus den Zustandswerten und den Residuen ermittelte charakteristische Kenngröße den Grenzwert übersteigt.

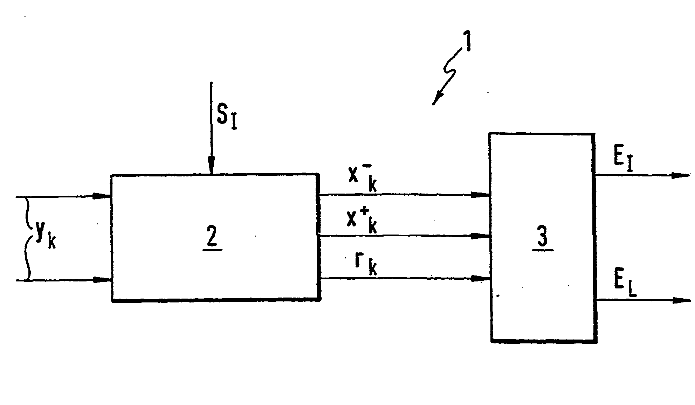

Weitere Vorteile und zweckmäßige Ausführungsformen sind den weiteren Ansprüchen, der Figurenbeschreibung und der Zeichnung zu entnehmen, in der schematisch eine Einrichtung zur Detektion und Lokalisation von Sensorfehlern in Kraftfahrzeugen dargestellt ist.

Die Einrichtung 1 umfaßt eine Berechnungseinheit 2 und eine Auswerteeinheit 3; sie kann darüberhinaus auch einen Fahrzeugregler zur Beeinflussung des dynamischen Fahrverhaltens eines Kraftfahrzeugs enthalten. In der Berechnungseinheit 2 werden in einem mathematischen Ersatzmodell das Fahrzeugsystem beschrei-. bende Zustandsgrößen ermittelt, die der Auswerteeinheit 3 zugeführt werden, in der auf der Grundlage der zugeführten Informationen die Entscheidung gefällt wird, ob das der Einrichtung 1 zugeführte Signal eines Sensors fehlerhaft ist.

Über Sensoren werden der Berechnungseinheit 2 Meßsignale $y_k$ als zeitdiskrete Eingangssignale zugeführt, die den Fahrzeugzustand zu Zeitpunkten k-1, k, k+1 etc. repräsentieren. Weiterhin werden der Berechnungseinheit 2 Systeminformationen $S_I$ als Eingangssignale zugeführt, insbesondere Massen, Trägheitsmomente und dergleichen. Die Systeminformationen $S_I$ können in einer Speichereinheit abgelegt sein, die mit der Berechnungseinheit 2 kommuniziert oder in die Berechnungseinheit 2 integriert ist.

Das in der Berechnungseinheit 2 niedergelegte mathematische Ersatzmodell beruht auf einem Kalman-Filter, mit dem auf das System einwirkende stochastische Störungen berücksichtigt werden können, und wird beschrieben durch die vektoriellen Gleichungen

$$x^-_k = A_{k-1} * x^+_{k-1} + B_k * u_k \, ,$$

$$x^+_k = x^-_k + K_k * r_k \, ,$$

$$r_k = y_k - C_k * x^-_k \, ,$$

wobei $x^-_k$ der den Zustandswert repräsentierende Prädiktionswert des Kalman-Filters ist, der unmittelbar vor Eintreffen der Messung zum Zeitpunkt k ermittelt wird, $x^+_{k-1}$ der optimale Filterschätzwert des Kalman-Filters ist, der unmittelbar nach Verfügbarkeit der Meßsignale zum Zeitpunkt k berechnet wird, und $r_k$ die Residuen bezeichnet, die der Abweichung zwischen dem gemessenen Meßsignal $y_k$ und dem rechnerisch ermittelten, transformierten Prädiktionswert $x^-_k$ entsprechen. Die Matrix A bezeichnet die Systemmatrix des mathematischen Ersatzmodells in zeitdiskreter Form, die auf der Basis von Bewegungsgleichungen in Abhängigkeit von fahrzeugabhängigen Parametern angegeben werden kann. Die Matrix B ist die zeitdiskrete Steuermatrix, über die der Eingangsvektor u transformiert wird. $C_k$ bezeichnet die Meßmatrix des Systems. Die Matrix $K_k$ ist das Kalman-Gain (Verstärkungsmatrix), über das der Vektor der Residuen $r_k$ transformiert wird und das nach der Vorschrift

$$K_k = P^-_k * C^T_k * (C_k * P^-_k * C^T_k + R_k)^{-1}$$

mit der Prädiktions-Kovarianzmatrix $P^-_k$

$$P^-_k = A_{k-1} * P^+_{k-1} * A^t_{k-1} + G_{k-1} * Q_{k-1} * G^T_{k-1}$$

und der Filterschätzwert-Kovarianzmatrix $P^+_k$

$$P^+_k = P^-_k - K_k * C_k * P^-_k$$

berechnet wird. Hierin bezeichnet Q eine Kovarianzmatrix des Störvektors, G eine Störmatrix zur Verteilung des Systemrauschens auf die Zustandsgrößen und $R_k$ eine Verteilungsdichtematrix. Über die Matrizen Q, G und $R_k$ werden stochastische Einflüsse berücksichtigt.

Der in der Berechnungseinheit 2 ermittelte Prädiktionswert $x^-_k$, der optimale Filterschätzwert $x^+_{k-1}$ und die Residuen $r_k$ werden als Eingangssignale der Auswerteeinheit 3 zugeführt, die als robuste Auswertelogik (Residual Evaluation Logic) ausgeführt ist. In der Auswerteeinheit 3 wird zunächst ein Schätzfehler $e^-_k$ aus der Differenz des optimalen Filterschätzwerts $x^+_{k-1}$ zum vorangegangenen Zeitpunkt k-1 und des Prädiktionswerts $x^-_k$ zum nachfolgenden Zeitpunkt k gemäß der Beziehung

$$e^-_k = x^+_{k-1} - x^-_k$$

berechnet. In einem weiteren Schritt wird aus dem Schätzfehler $e^-_k$ eine charakteristische Kenngröße $\varepsilon$ gemäß der Vorschrift

$$\varepsilon = R^M_k * e^-_k$$

ermittelt, die ein hinreichendes Identifikationsmerkmal eines Sensorfehlers ist. Die charakteristische Kenngröße $\varepsilon$ wird der Entscheidung zugrunde gelegt, ob ein Meßsignal $y_k$ außerhalb eines zulässigen Rahmens liegt und dementsprechend der zugehörige Sensor fehlerhaft ist. Zur Berechnung der charakteristischen Kenngröße $\varepsilon$ wird der Schätzfehler $e^-_k$ von links mit der Diagonalmatrix $R^M_k$ multipliziert, die auf der Hauptdiagonalen mit den Komponenten des Vektors der Residuen $r_k$ belegt ist. Bei dieser Berechnungsmethode liegt die charakteristische Kenngröße $\varepsilon$ als Vektor vor.

Alternativ kann die charakteristische Kenngröße $\varepsilon$ auch skalar berechnet werden, indem jede Komponente des Vektors der Schätzwerte $e^-_k$ mit der zugehörigen Komponente des Vektors der Residuen $r_k$ multipliziert wird. Diese Vorgehensweise hat den Vorteil, daß auf die Erzeugung der Diagonalmatrix $R^M_k$ aus dem Vektor der Residuen $r_k$ verzichtet werden kann.

Bedingt durch die Tiefpaßfilterung des Kalman-Filters sind die Rauschanteile im Schätzfehler $e^-_k$ sehr gering, so daß auch das durch die Residuen verstärkte Signal - die charakteristische Kenngröße $\varepsilon$ - rauscharm ist und zur weiteren Auswertung herangezogen werden kann.

Die charakteristische Kenngröße $\varepsilon$ wird in der Auswerteeinheit 3 mit einem Grenzwert $s_k$ verglichen. Liegt der Wert der Kenngröße $\varepsilon$ über dem Grenzwert $s_k$, wird ein vorteilhaft aus zwei Komponenten bestehendes Fehlersignal $E_I$, $E_L$ erzeugt, das angezeigt oder Stellelementen im Fahrzeug zugeführt werden kann. Die erste Komponente $E_I$ des Fehlersignals zeigt an, daß ein Fehler detektiert wurde. Die zweite Komponente $E_L$ lokalisiert den Ort des Fehlersignals, indem die Position der fehlerhaften Komponente innerhalb des Vektors der charakteristischen Kenngröße $\varepsilon$ angegeben wird. Hieraus kann unmittelbar auf den fehlerhaften Sensor geschlossen werden.

Der Grenzwert $s_k$ ist ein adaptiver Schwellwert und wird aus dem Residuum $r_k$ gemäß der Vorschrift

$$s_k = 1/m * M_k * r_k$$

berechnet. Hierin bezeichnet m die Dimension des Vektors der Meßsignale $y_k$ und $M_k$ eine Gewichtungsmatrix, die bevorzugt empirisch ermittelt wird und mit der einzelne Komponenten des Vektors der Residuen $r_k$ stärker gewichtet werden können.

Gemäß einer bevorzugten Ausführung hat der Vektor der Meßsignale $y_k$ die Dimension m = 5 und weist die Form

$$y_k = (\omega_1, \omega_2, \omega_3, \omega_4, a_x)^T$$

mit den Raddrehzahlen $\omega_1, \omega_2, \omega_3, \omega_4$ der Fahrzeugräder und der Längsbeschleunigung $a_x$. Diese Meßsignale werden über Sensoren während des Fahrbetriebs aufgenommen.

Die Gewichtungsmatrix $M_k$ hat die Dimension 5x5 und liegt in der Form

$$M_k = \begin{bmatrix} m_{11} & 0 & m_{13} & 0 & 0 \\ 0 & m_{22} & 0 & m_{24} & 0 \\ m_{31} & 0 & m_{33} & 0 & 0 \\ 0 & m_{42} & 0 & m_{44} & 0 \\ 0 & 0 & 0 & 0 & m_{55} \end{bmatrix}$$

vor; die Koeffizienten $m_{ij}$ der Gewichtungsmatrix $M_k$ werden empirisch ermittelt.

Der Vektor der Prädiktionswerte $x^-_k$ hat die Dimension 10x1 und nimmt die Form

$$x^-_k = (\omega_1, \omega_2, \omega_3, \omega_4, v_x, \theta, M_1, M_2, M_3, M_4)^T$$

ein. Neben den echten, eine Eigendynamik beinhaltenden Zustandsgrößen $\omega_1$, $\omega_2$, $\omega_3$, $\omega_4$ für die Raddrehzahlen und der Längsgeschwindigkeit $v_x$ ist der Vektor der Prädiktionswerte um fünf Opferzustände erweitert, die zu einer Modellverbesserung beitragen, jedoch keine Eigendynamik aufweisen. Diese Opferzustände sind die Straßenneigung $\theta$ und die auf die Räder wirkenden Radmomente $M_1$ bis $M_4$.

In einer anderen Ausführung können als Opferzustände neben der Straßenneigung $\theta$ auch die Schräglaufwinkel $\alpha_1$, $\alpha_2$, $\alpha_3$, $\alpha_4$ an den Fahrzeugrädern berücksichtigt werden.

Der Vektor der Residuen $r_k$ hat die Dimension 5x1:

$$r_k = (r_{1k}, r_{2k}, r_{3k}, r_{4k}, r_{5k})^T ;$$

aus den Residuen rk wird die 5x5-Diagonalmatrix $R^M_k$ gebildet, deren Hauptdiagonale die Komponenten des Residuums $r_k$ enthält und im übrigen mit Null belegt ist:

$$R^M_k = \begin{bmatrix} r_{1k} & 0 & 0 & 0 & 0 \\ 0 & r_{2k} & 0 & 0 & 0 \\ 0 & 0 & r_{3k} & 0 & 0 \\ 0 & 0 & 0 & r_{4k} & 0 \\ 0 & 0 & 0 & 0 & r_{5k} \end{bmatrix}$$

Zur Bildung der charakteristischen Kenngröße wird eine Matrix-Vektor-Multiplikation der Diagonalmatrix $R^M_k$ mit dem Vektor der Schätzfehler $e^-_k$ vorgenommen, wobei im Vektor der Schätzfehler $e^-_k$ nur die Differenzen von eigendynamischen Zustandsgrößen - die Raddrehzahlen und die Längsgeschwindigkeit - berücksichtigt werden, nicht jedoch die den Opferzuständen zugeordneten Komponenten.

Alternativ kann die Diagonalmatrix $R^M_k$ auch der Dimension des Vektors der Prädiktionswerte entsprechend als 10x10-Matrix formuliert werden, die gegenüber der 5x5-Diagonalmatrix mit Nullen aufgefüllt ist. In diesem Fall kann die Vektor-Matrix-Multiplikation von Diagonalmatrix $R^M_k$ und Vektor der Schätzfehler $e^-_k$ ohne Reduzierung der Dimension des Schätzfehler-Vektors erfolgen.

Der Eingangsvektor $u_k$ hat die Dimension 6x1:

$$u_k = (k_1, k_2, k_3, k_4, a_x, d\psi/dt)^T$$

$k_1$ bis $k_4$ bezeichnenAntriebs- und Bremsmomente sowie durch Radlasten entstehende Momente, $d\psi/dt$ ist die Giergeschwindigkeit.

Dementsprechend hat die Systemmatrix A die Dimension 10x10, die Steuermatrix B die Dimension 10x6, die Meßmatrix $C_k$ die Dimension 5x10, das Kalman-Gain die Dimension 10x5, der Schätzfehler $e^-_k$ und die charakteristi-

sche Kenngröße ε die Dimension 5x1 und der Grenzwert $s_k$ die Dimension 5x1.

**Patentansprüche**

1. Verfahren zur Detektion und Lokalisation von Sensorfehlern in Kraftfahrzeugen, wobei zur Detektion und Lokalisation der Sensorfehler ein Fehlersignal ($E_I$, $E_L$) unter Verwendung eines mathematischen Ersatzmodells und durch Auswertung eines Meßsignals ($y_k$) eines Zustandswerts ($x^-_k$) und eines Residuums ($r_k$) ermittelt wird,
   **dadurch gekennzeichnet, dass**

   - von einem Sensor das Meßsignal ($y_k$), welches das dynamische Verhalten des Kraftfahrzeugs beschreibt, ermittelt wird,
   - aus dem mathematischen Ersatzmodell der dem Meßsignal ($y_k$) zugeordnete Zustandswert ($x^-_k$) berechnet wird,
   - das Residuum ($r_k$) aus der Differenz von Meßsignal ($y_k$) und einer dem Meßsignal ($y_k$) entsprechenden, aus dem Zustandswert ($x^-_k$) gebildeten Bezugsgröße ($C*x^-_k$) ermittelt wird,
   - ein Schätzfehler ($e^-_k$) des Zustandswerts ($x^-_k$) ermittelt wird,
   - eine charakteristische Kenngröße (ε) aus der Multiplikation des Residuums ($r_k$) und des Schätzfehlers ($e^-_k$) gebildet wird
   - und das Fehlersignal ($E_I$, $E_L$) erzeugt wird, wenn die charakteristische Kenngröße (ε) einen Grenzwert ($s_k$) übersteigt.

2. Verfahren nach Anspruch 1,
   **dadurch gekennzeichnet,**
   **daß** das mathematische Ersatzmodell auf einem Kalman-Filteralgorithmus beruht, wobei der Zustandswert gleich dem Prädiktionswert ($x^-_k$) des Kalman-Filters ist, der der Beziehung

   $$x^-_k = A_{k-1} * x^+_{k-1} + B_k * u_k$$

   entspricht, worin
   A die Systemmatrix
   B die Steuermatrix
   u der Eingangsvektor
   der Index "-" den Zeitpunkt unmittelbar vor Eintreffen des Meßwerts
   der Index "+" den Zeitpunkt unmittelbar nach Verfügbarkeit des Meßwerts und
   der Index "k" die zeitdiskrete Systemdarstellung
   bezeichnet.

3. Verfahren nach Anspruch 1 oder 2,
   **dadurch gekennzeichnet,**
   **daß** das Residuum ($r_k$) sich aus dem Meßsignal ($y_k$) und dem Zustandswert ($x^-_k$) gemäß der Beziehung

   $$r_k = y_k - C_k * x^-_k$$

   berechnet, worin
   $C_k$ die Meßmatrix
   bezeichnet.

4. Verfahren nach einem der Ansprüche 1 bis 3,
   **dadurch gekennzeichnet,**
   **daß** ein optimaler Filterschätzwert ($x^+_k$) aus der Vorschrift

   $$x^+_k = x^-_k + K_k * r_k$$

   ermittelt wird, wobei $K_k$ eine Verstärkungsmatrix ist.

**5.** Verfahren nach Anspruch 4,
**dadurch gekennzeichnet,**
**daß** die Verstärkungsmatrix ($K_k$) ein Kalman-Gain ist, das nach der Beziehung

$$K_k = P^-_k * C^T_k * (C_k * P^-_k * C^T_k + R_k)^{-1}$$

mit der Prädiktions-Kovarianzmatrix $P^-_k$

$$P^-_k = A_{k-1} * P^+_{k-1} * A^t_{k-1} + G_{k-1} * Q_{k-1} * G^T_{k-1}$$

und der Filterschätzwert-Kovarianzmatrix $P^+_k$

$$P^+_k = P^-_k - K_k * C_k * P^-_k$$

berechnet wird, wobei

Q      eine Kovarianzmatrix des Störvektors,
G      eine Störmatrix zur Verteilung des Systemrauschens auf die Zustandsgrößen und
$R_k$   eine Verteilungsdichtematrix

bezeichnen.

**6.** Verfahren nach Anspruch 4 oder 5,
**dadurch gekennzeichnet,**
**daß** der Schätzfehler ($e^-_k$) aus der Differenz des optimalen Filterschätzwerts ($x^+_{k-1}$) und des Prädiktionswerts ($x^-_k$) gemäß der Beziehung

$$e^-_k = x^+_{k-1} - x^-_k$$

ermittelt wird.

**7.** Verfahren nach Anspruch 6,
**dadurch gekennzeichnet,**
**daß** die charakteristische Kenngröße ($\varepsilon$) aus der Beziehung

$$\varepsilon = R^M_k * e^-_k$$

ermittelt wird, worin

$R^M_k$      eine Diagonalmatrix mit den Komponenten des Residuums auf der Hauptdiagonalen

bezeichnet.

**8.** Verfahren nach einem der Ansprüche 1 bis 7,
**dadurch gekennzeichnet,**
**daß** der Grenzwert ($s_k$) sich adaptiv aus dem Residuum ($r_k$) gemäß der Vorschrift

$$s_k = 1/m * M_k * r_k$$

berechnet, worin

m      die Dimension des Vektors der Meßsignale ($y_k$) und

$M_k$      eine Gewichtungsmatrix

bezeichnen.

**9.** Verfahren nach den vorhergehenden Ansprüchen,
**dadurch gekennzeichnet,**
**daß** der Vektor der Meßsignale ($y_k$) die Form

$$y_k = (\omega_1, \omega_2, \omega_3, \omega_4, a_x)^T$$

mit der Dimension

$$m = 5$$

einnimmt, worin

$\omega_1$ bis $\omega_4$      die Raddrehzahlen der Fahrzeugräder,
$a_x$            die Längsbeschleunigung des Fahrzeugs

bezeichnen.

**10.** Verfahren nach Anspruch 9,
**dadurch gekennzeichnet,**
**daß** die Gewichtungsmatrix ($M_k$) die Form

$$M_k = \begin{bmatrix} m_{11} & 0 & m_{13} & 0 & 0 \\ 0 & m_{22} & 0 & m_{24} & 0 \\ m_{31} & 0 & m_{33} & 0 & 0 \\ 0 & m_{42} & 0 & m_{44} & 0 \\ 0 & 0 & 0 & 0 & m_{55} \end{bmatrix}$$

einnimmt, wobei die Koeffizienten ($m_{ij}$) der Gewichtungsmatrix ($M_k$) empirisch ermittelt werden.

**11.** Verfahren nach Anspruch 9 oder 10,
**dadurch gekennzeichnet,**
**daß** der Vektor der Zustandswerte ($x^-_k$) die Form

$$x^-_k = (\omega_1, \omega_2, \omega_3, \omega_4, v_x, \theta, M_1, M_2, M_3, M_4)^T$$

einnimmt, worin

$\omega_1$ bis $\omega_1$      die Raddrehzahlen,
$v_x$            die Längsgeschwindigkeit des Fahrzeugs,
$\theta$            die Straßenneigung,
$M_1$ bis $M_4$      auf die Räder wirkende Radmomente

bezeichnen und als Opferzustände ohne Eigendynamik im Zustandsvektor enthalten sind.

**12.** Verfahren nach einem der Ansprüche 9 bis 11,
**dadurch gekennzeichnet,**
**daß** die auf der Hauptdiagonalen die Komponenten des Residuums ($r_k$) enthaltende Diagonalmatrix ($R^M_k$) die Form

$$R^M_k = \begin{bmatrix} r_{1k} & 0 & 0 & 0 & 0 \\ 0 & r_{2k} & 0 & 0 & 0 \\ 0 & 0 & r_{3k} & 0 & 0 \\ 0 & 0 & 0 & r_{4k} & 0 \\ 0 & 0 & 0 & 0 & r_{5k} \end{bmatrix}$$

einnimmt, wobei im Schätzfehler ($e^-_k$) nur die Differenzen von eigendynamischen Zustandsgrößen berücksichtigt werden.

**13.** Verfahren nach einem der Ansprüche 9 bis 12,
**dadurch gekennzeichnet,**
**daß** der Eingangsvektor ($u_k$) die Form

$$u_k = (k_1, k_2, k_3, k_4, a_x, d\psi/dt)^T$$

einnimmt, worin

$k_1$ bis $k_4$     Antriebs- und Bremsmomente sowie durch Radlasten entstehende Momente,
$d\psi/dt$     die Giergeschwindigkeit

bezeichnen.

**14.** Einrichtung zur Detektion und Lokalisation von Sensorfehlern in Kraftfahrzeugen, wobei die Einrichtung eine Berechnungseinheit (2) und eine Auswerteeinheit (3) aufweist und wobei zur Detektion und Lokalisation der Sensorfehler ein Fehlersignal ($E_l$, $E_L$) unter Verwendung eines mathematischen Ersatzmodells und durch Auswertung eines Meßsignals ($y_k$), eines Zustandswertes ($x^-_k$) und eines Residuums ($r_k$)ermittelt wird,
**dadurch gekennzeichnet, dass**
der Berechnungseinheit (2) das von einem Sensor ermittelte Meßsignal ($y_k$), welches das dynamische Verhalten des Kraftfahrzeugs beschreibt, zugeführt wird, wobei in der Berechnungseinheit (2) mittels des in dieser niedergelegten mathematischen Ersatzmodells der dem Meßsignal ($y_k$) zugeordnete Zustandswert ($x^-_k$) berechnet wird, wobei in der Berechnungseinheit (2) ferner das Residuum ($r_k$) aus der Differenz von Meßsignal ($y_k$) und einer dem Meßsignal ($y_k$) entsprechenden, aus dem Zustandswert ($x^-_k$) gebildeten Bezugsgröße ($C*x^-_k$) ermittelt wird, und wobei der Zustandswert ($x^-_k$) und das Residuum ($r_k$) ausgehend von der Berechnungseinheit (2) der Auswerteeinheit (3) zugeführt wird, und wobei in der Auswerteeinheit (3) ein Schätzfehler ($e^-_k$) des Zustandswerts ($x^-_k$) ermittelt wird, und eine charakteristische Kenngröße (s) aus der Multiplikation des Residuums ($r_k$) und des Schätzfehlers ($e^-_k$) gebildet wird und das Fehlersignal ($E_l$, $E_L$) erzeugt wird, wenn die charakteristische Kenngröße ($\varepsilon$) einen Grenzwert ($s_k$) übersteigt.

**Claims**

**1.** Method of detecting and locating sensor errors in motor vehicles, whereby the sensor errors are located and detected by determining an error signal ($E_l$, $E_L$) using a mathematical virtual model and by evaluating a measurement signal ($y_k$), a state value ($x^-_k$) and a residual ($r_k$),
**characterised in that**

- the measurement signal ($y_k$), which describes the dynamic behaviour of the motor vehicle, is detected by a sensor,
- the state value ($x^-_k$) assigned to the measurement signal ($y_k$) is calculated from the mathematical virtual model,
- the residual ($r_k$) is determined from the difference between the measurement signal ($y_k$) and a reference variable ($C*x^-_k$) derived from the state value ($x^-_k$) corresponding to the measurement signal ($y_k$),
- an estimated error ($e^-_k$) of the state value ($x^-_k$) is determined,

- a characteristic variable ($\varepsilon$) is obtained by multiplying the residual ($r_k$) and the estimated error ($e^-_k$)
- and the error signal ($E_I$, $E_L$) is generated if the characteristic variable ($\varepsilon$) exceeds a threshold value ($s_k$).

**2.** Method as claimed in claim 1,
**characterised in that**
the mathematical virtual model is based on a Kalman filter algorithm, in which the state value is equal to the prediction value ($x^-_k$) of the Kalman filter, which corresponds to the equation

$$x^-_k = A_{k-1} * x^*_{k-1} + B_k * u_k$$

in which
A denotes the system matrix
B denotes the control matrix
u denotes the input vector
the index "-" denotes the instant immediately prior to the occurrence of the measurement value,
the index "+" denotes the instant immediately after the availability of the measurement value and
the index "k" denotes the system plotted on a time-discrete basis.

**3.** Method as claimed in claim 1 or 2,
**characterised in that**
the residual ($r_k$) is calculated from the measurement signal ($y_k$) and the state value ($x^-_k$) on the basis of the following equation

$$r_k = y_k - C_k * x^-_k$$

in which
$C_k$ stands for the measurement matrix.

**4.** Method as claimed in one of claims 1 to 3,
**characterised in that**
an optimum filter estimated value ($x^+_k$) is determined in accordance with the rule

$$x^+_k = x^-_k + K_k * r_k$$

in which $K_k$ is an amplification matrix.

**5.** Method as claimed in claim 4,
**characterised in that**
the amplification matrix ($K_k$) is a Kalman gain calculated on the basis of the following equation

$$K_k = P^-_k * C^T_k * (C_k * P^-_k * C^T_k + R_k)^{-1}$$

with the prediction covariance matrix $P^-_k$

$$P^-_k = A_{k-1} * P^+_{k-1} * A^t_{k-1} + G_{k-1} * Q_{k-1} * G^T_{k-1}$$

and the filter estimated value covariance matrix $P^+_k$

$$P^+_k = P^-_k - K_k * C_k * P^-_k$$

in which

Q    denotes a covariance matrix of the interference vector

G    denotes an interference matrix for distributing the system noise between the state variables and

$R_k$   is a distribution density matrix.

**6.** Method as claimed in claim 4 or 5,
**characterised in that**
the estimated error ($e^-_k$) is derived from the difference between the optimal filter estimated value ($x^+_{k-1}$) and the prediction value ($x^-_k$) in accordance with the following equation

$$e^-_k = x^+_{k-1} - x^-_k.$$

**7.** Method as claimed in claim 6,
**characterised in that**
the characteristic variable ($\varepsilon$) is determined in accordance with the equation

$$\varepsilon = R^M_k * e^-_k$$

in which

$R^M_k$    denotes a diagonal matrix with the components of the residual on the main diagonal.

**8.** Method as claimed in one of claims 1 to 7,
**characterised in that**
the threshold value ($s_k$) is calculated from the residual ($r_k$) on an adaptive basis in accordance with the rule

$$s_k = 1/m * M_k * r_k$$

in which

m    denotes the dimension of the vector of the measurement signal ($y_k$) and

$M_k$    stands for a weighting matrix.

**9.** Method as claimed in one of the preceding claims,
**characterised in that**
the vector of the measurement signals ($y_k$) is expressed as

$$y_k = (\omega_1, \omega_2, \omega_3, \omega_4, a_x)^T$$

with the dimension m = 5,
in which

$\omega_1$ to $\omega_4$    denote the wheel speeds of the vehicle wheels,

$a_x$            denotes the longitudinal acceleration of the vehicle.

**10.** Method as claimed in claim 9,
**characterised in that**
the weighting matrix ($M_k$) is expressed as

$$M_k = \begin{bmatrix} m_{11} & 0 & m_{13} & 0 & 0 \\ 0 & m_{22} & 0 & m_{24} & 0 \\ m_{31} & 0 & m_{33} & 0 & 0 \\ 0 & m_{42} & 0 & m_{44} & 0 \\ 0 & 0 & 0 & 0 & m_{55} \end{bmatrix}$$

in which the coefficients ($m_{ij}$) of the weighting matrix ($M_k$) are empirically determined.

**11.** Method as claimed in claim 9 or 10,
**characterised in that**
the vector of the state values ($x^-_k$) is expressed as

$$x^-_k = (\omega_1, \omega_2, \omega_3, \omega_4, v_x, \theta, M_1, M_2, M_3, M_4)^T.$$

in which

$\omega_1$ to $\omega_4$     denote the wheel speeds,
$v_x$     denotes the longitudinal speed of the vehicle,
$\theta$     denotes the road gradient
$M_1$ to $M_4$     denote the wheel torques acting on the wheels

and are contained in the state vector as sacrificial states without any intrinsic dynamics.

**12.** Method as claimed in one of claims 9 to 11,
**characterised in that**
the diagonal matrix ($R^M_k$) containing the components of the residual $r_k$ is expressed as

$$R^M_k = \begin{bmatrix} r_{1k} & 0 & 0 & 0 & 0 \\ 0 & r_{2k} & 0 & 0 & 0 \\ 0 & 0 & r_{3k} & 0 & 0 \\ 0 & 0 & 0 & r_{4k} & 0 \\ 0 & 0 & 0 & 0 & r_{5k} \end{bmatrix}.$$

in which only the differences from intrinsically dynamic state variables are taken into account in the estimated error ($e^-_k$).

**13.** Method as claimed in one of claims 9 to 12,
**characterised in that**
the input vector ($u_k$) is expressed as

$$u_k = (k_1, k_2, k_3, k_4, a_x, d\Psi/dt)^T$$

in which

$K_{1 \text{ to } k4}$     denote drive and brake torques as well as torques occurring due to wheel loads

dψ/dt    denotes the angular yaw rate.

14. System for detecting and locating sensor errors in motor vehicles, the system having a computer unit (2) and an evaluation unit (3), by which the sensor errors are located and detected by determining an error signal ($E_l$, $E_L$) using a mathematical virtual model and by evaluating a measurement signal ($y_k$), a state value ($x^-_k$) and a residual ($r_k$),
**characterised in that**
the measurement signal ($y_k$) detected by a sensor, which describes the dynamic behaviour of the motor vehicle, is applied to the computer unit (2), the state value ($x^-_k$) assigned to the measurement signal ($y_k$) is calculated in the computer unit (2) by means of the mathematical virtual model stored therein, the residual ($r_k$) also being determined in the computer unit (2) from the difference between the measurement signal ($y_k$) and a reference variable ($C*x^-_k$) derived from the state value ($x^-_k$) corresponding to the measurement signal ($y_k$), and the state value ($x^-_k$) and residual ($r_k$) are forwarded by the computer unit (2) to the evaluation unit (3) and an estimated error ($e^-_k$) of the state value ($x^-_k$) is determined in the evaluation unit (3), and a characteristic variable ($\varepsilon$) is obtained by multiplying the residual ($r_k$) and the estimated error ($e^-_k$), and the error signal ($E_l$, $E_L$) is generated if the characteristic variable ($\varepsilon$) exceeds a threshold value ($s_k$).

**Revendications**

1. Procédé pour détecter et localiser des pannes de capteurs dans les véhicules automobiles, un signal d'erreur ($E_r$, $E_L$) étant déterminé pour cette détection et localisation desdites pannes de capteurs en utilisant un modèle de remplacement mathématique et en interprétant un signal de mesure ($y_k$) d'une valeur d'état ($x^-_k$) et d'un résidu ($r_k$),
**caractérisé en ce que**

   - le signal de mesure ($y_k$) décrivant le comportement dynamique du véhicule est déterminé par un capteur,
   - la valeur d'état ($x_k$) affectée au signal de mesure ($y_k$) est calculée à partir du modèle de remplacement mathématique,
   - le résidu ($r_k$) est déterminé par la différence entre le signal de mesure ($y_k$) et une grandeur de référence ($C*x^-_k$) correspondant au signal de mesure ($y_k$) et formée à partir de la valeur d'état ($x^-_k$),
   - une erreur estimative ($e^-_k$) de la valeur d'état ($x^-_k$) est déterminée,
   - une grandeur caractéristique ($\varepsilon$) est formée à partir de la multiplication du résidu ($r_k$) par l'erreur estimative ($e^-_k$), et que
   - le signal d'erreur ($E_r$, $E_L$) est généré lorsque la grandeur caractéristique ($\varepsilon$) dépasse une valeur limite ($s_k$).

2. Procédé selon la revendication 1,
**caractérisé en ce que**
le modèle de remplacement mathématique se base sur un algorithme à filtre de Kalman, la valeur d'état étant égale à la valeur de prédiction ($x^-_k$) du filtre de Kalman correspondant à la relation

$$x^-_k = A_{k-1} * x^+_{k-1} + B_k * u_k$$

dans laquelle
A désigne la matrice système,
B la matrice de commande,
u le vecteur d'entrée,
l'index "-"caractérisant l'instant juste avant l'obtention de la valeur de mesure
l'index "+" l'instant juste à la suite de la disponibilité de la valeur de mesure, et
l'index "k" la représentation de nature discrète dans le temps du système.

3. Procédé selon la revendication 1 ou 2,
**caractérisé en ce que**
le résidu ($r_k$) se calcule à partir du signal de mesure ($y_k$) et de la valeur d'état ($x^-_k$), en application de la relation

$$r_k = y_k - C_k * x^-_k$$

dans laquelle
$C_k$ est la matrice de mesure.

4. Procédé selon l'une quelconque des revendications 1 à 3,
   **caractérisé en ce que**
   une valeur estimative filtre optimale ($x^+_k$) est déterminée sur la base de la consigne

$$X^+_k = X^-_k + K_k * r_k$$

dans laquelle
$K_k$ est une matrice de gain.

5. Procédé selon la revendication 4
   **caractérisé en ce que**
   la matrice de gain ($K_k$) est constituée d'un gain Kalman calculé par la relation

$$K_k = P^-_k * C^T_k * (C_k * P^-_k * C^T_k + R_k)^{-1}$$

avec la matrice de covariance et de prédiction $P^-_k$

$$P^-_k = A_{k-1} * P^+_{k-1} * A^t_{k-1} + G_{k-1} * Q_{k-1} * G^T_{k-1}$$

et la matrice de covariance et de valeur estimative filtre $P^+_k$

$$P^+_k = P^-_k - K_k * C_k * P^-_k$$

dans laquelle
Q est une matrice de covariance du vecteur de dérangement,
G est une matrice de dérangement destinée à la répartition du bruit du système sur les grandeurs d'état, et
$R_k$ est une matrice de densité de répartition.

6. Procédé selon la revendication 4 ou 5,
   **caractérisé en ce que**
   l'erreur estimative ($e^-_k$) est déterminée par la différence entre la valeur estimative filtre optimale ($x^+_{k-1}$) et la valeur de prédiction ($x^-_k$) sur la base de la relation

$$e^-_k = x^+_{k-1} - x^-_k$$

7. Procédé selon la revendication 6,
   **caractérisé en ce que**
   la grandeur caractéristique ($\varepsilon$) est déterminée par la relation

$$\varepsilon = R^M_k * e^-_k$$

dans laquelle
$R^M_k$ désigne une matrice diagonale avec les composantes du résidu sur la diagonale principale.

8. Procédé selon l'une quelconque des revendications 1 à 7,
   **caractérisé en ce que**
   la valeur limite ($s_k$) se calcule de façon adaptative à partir du résidu ($r_k$) sur la base de la consigne

$$S_k = 1/m * M_k * r_k$$

dans laquelle

m désigne la dimension du vecteur des signaux de mesure ($y_k$) et

$M_k$ une matrice de pondération.

9. Procédé selon les revendications précédentes,
   **caractérisé en ce que**
   le vecteur des signaux de mesure ($y_k$) prend la forme

$$y_k = (\omega_1, \omega_2, \omega_3, \omega_4, a_x)^T$$

avec la dimension

m=5

dans laquelle

$\omega 1$ à $\omega 4$ désignent les vitesses des roues du véhicule, et

$a_x$ l'accélération longitudinale du véhicule.

10. Procédé selon la revendication 9,
    **caractérisé en ce que**
    la matrice de pondération ($M_k$) prend la forme

$$M_k = \begin{pmatrix} m11 & 0 & m13 & 0 & 0 \\ 0 & m22 & 0 & m24 & 0 \\ m31 & 0 & m33 & 0 & 0 \\ 0 & m42 & 0 & m44 & 0 \\ 0 & 0 & 0 & 0 & m55 \end{pmatrix}$$

les coefficients ($m_{ij}$) de la matrice de pondération ($M_k$) étant déterminés de manière empirique.

11. Procédé selon la revendication 9 ou 10,
    **caractérisé en ce que**
    le vecteur des valeurs d'état ($x^-_k$) prend la forme

$$x^-_k = (\omega_1, \omega_2, \omega_3, \omega_4, v_x, \theta, M_1, M_2, M_3, M_4)^T$$

dans laquelle

$\omega_1$ à $\omega_1$ désignent les vitesses des roues,

$v_x$ la vitesse longitudinale du véhicule,

$\theta$ l'inclinaison de la route,

$M_1$ à $M_4$ les couples appliqués aux roues, et

lesquels sont compris dans le vecteur d'état en tant qu'états sacrificiels sans dynamique inhérente.

12. Procédé selon l'une quelconque des revendications 9 à 11,
    **caractérisé en ce que**
    la matrice diagonale ($R^M k$) comprenant sur la diagonale principale les composants du résidu ($r_k$) prend la forme

$$R^M_k = \begin{pmatrix} r1k & 0 & 0 & 0 & 0 \\ 0 & r2k & 0 & 0 & 0 \\ 0 & 0 & r3k & 0 & 0 \\ 0 & 0 & 0 & r4k & 0 \\ 0 & 0 & 0 & 0 & r5k \end{pmatrix}$$

seules les différences de grandeurs d'état à dynamique inhérente étant prises en compte dans l'erreur estimative $(e^-_k)$.

**13.** Procédé selon l'une quelconque des revendications 9 à 12,
**caractérisé en ce que**
le vecteur d'entrée $(u_k)$ prend la forme

$$u_k = (k_1, k_2, k_3, k_4, a_x, d\psi/dt)^T$$

dans laquelle
$k_1$ à $k_4$ désignent des couples d'entraînement et de freinage ainsi que des couples engendrés par les charges appliquées sur les roues, et
$d\psi / dt$ désignant la vitesse d'embardée.

**14.** Dispositif destiné à détecter et localiser des pannes de capteurs dans les véhicules automobiles, ledit dispositif comportant une unité de calcul (2) et une unité d'évaluation (3), un signal d'erreurs $(E_r, E_L)$ étant déterminé pour la détection et localisation desdites pannes de capteurs en utilisant un modèle de remplacement mathématique et en évaluant un signal de mesure $(y_k)$, une valeur d'état $(X^-_k)$ et un résidu $(r_k)$,
**caractérisé en ce que**
le signal de mesure $(y_k)$ déterminé par un capteur et décrivant le comportement dynamique du véhicule est envoyé dans l'unité de calcul (2), la valeur d'état $(x^-_k)$ affectée au signal de mesure $(y_k)$ est calculée dans l'unité de calcul (2) à l'aide du modèle de remplacement mathématique implanté dans ladite unité de calcul, par ailleurs, le résidu $(r_k)$ calculé en fonction de la différence entre le signal de mesure $(y_k)$ et une grandeur de référence $(c^*x^-_k)$ correspondant au signal de mesure $(y_k)$ et formé à partir de la valeur d'état $(x^-_k)$ est déterminé dans l'unité de calcul (2), la valeur d'état $(x^-_k)$ et le résidu $(r_k)$, partant de l'unité de calcul (2), sont envoyés dans l'unité d'évaluation (3), une erreur estimative $(e^-_k)$ de la valeur d'état $(x^-_k)$ est déterminée dans l'unité d'évaluation (3), une grandeur caracté-ristique $(\varepsilon)$ découlant de la multiplication du résidu $(r_k)$ par l'erreur estimative $(e^-_k)$ est formée et le signal d'erreurs $(E_r, E_L)$ est généré lorsque la grandeur caractéristique $(\varepsilon)$ dépasse une valeur limite $(s_k)$.